Europäisches Patentamt

European Patent Office

Office européen des brevets

(11) Numéro de publication: **0 148 813**
A2

# (12) DEMANDE DE BREVET EUROPEEN

(21) Numéro de dépôt: **85870004.0**

(22) Date de dépôt: **11.01.85**

(51) Int. Cl.⁴: **F 16 L 39/00, F 16 J 15/00**

(30) Priorité: **12.01.84 BE 212203**

(43) Date de publication de la demande: **17.07.85**
**Bulletin 85/29**

(84) Etats contractants désignés: **BE DE NL**

(71) Demandeur: **CONTIGEA SCHLUMBERGER S.A., Rue de Stalle, 140, B-1180 Bruxelles (BE)**

(72) Inventeur: **Mme. Claret-Opdecam, Lina, Rue du Roetaert 141, B-1180 Bruxelles (BE)**

(74) Mandataire: **Plucker, Guy et al, OFFICE KIRKPATRICK 4 Square de Meeûs, B-1040 Bruxelles (BE)**

(54) Joint d'étanchéité.

㊼ Joint d'étanchéité résistant aux températures élevées destiné à raccorder deux tubulures comportant chacune deux conduits concentriques présentant des faces d'about annulaires planes perpendiculaires à l'axe des conduits, comprenant une garniture élastique qui présente des surfaces d'appui planes et parallèles, occupant deux zones annulaires concentriques rendues solidaires l'une de l'autre par des régions radiales qui en font partie intégrante, et une bague métallique entourant la garniture élastique.

L'invention concerne un joint d'étanchéité résistant au feu, destiné à être inséré entre deux tubulures à raccorder entre elles, comportant chacune deux conduits concentriques.

Le joint d'étanchéité suivant l'invention a été mis au point, de manière plus particulière, pour le raccordement à une conduite de distribution de gaz (gaz de houille, gaz naturel ou analogues), d'un compteur à gaz du type dit "à raccord unique" ou "monotubulaire". L'invention sera décrite ci-après en se référant à cette application particulière du joint d'étanchéité, mais il doit être entendu que d'autres applications sont également possibles.

Les compteurs de gaz sont montés à l'entrée du réseau de l'abonné, soit au moyen de deux raccords (ce sont les compteurs à deux raccords ou bitubulaires), soit au moyen d'un seul raccord (ce sont les compteurs à raccord unique ou monotubulaires). Ce dernier raccord présente deux orifices coaxiaux.

Le raccord pour compteur monotubulaire comporte deux orifices concentriques dont l'un correspond à l'entrée du compteur et l'autre à la sortie de celui-ci. Le raccord monotubulaire est pourvu d'un joint d'étanchéité présentant deux plages d'étanchéité concentriques qu'il est facile de réaliser au moyen d'une garniture comportant deux parties annulaires dont l'agencement concentrique est assuré par au moins une partie radiale qui solidarise entre elles les parties annulaires.

Les installations de distribution de gaz doivent rester raisonnablement étanches en cas d'incendie, malgré l'exposition au feu, et ce, pendant une durée suffisante. A cet effet, les normes prévoient une limite tolérable pour les fuites lors de l'exposition à une température définie, pendant une durée imposée. Un raccord monotubulaire de compteur à gaz doit donc présenter une étanchéité suffisante dans des conditions d'incendie.

On a proposé et utilisé des joints en matière ignifuge, par exemple en aggloméré de fibres d'amiante.

De tels joints ignifuges ont une excellente résistance au feu, mais présentent un certain nombre d'inconvénients; en particulier, ils ne sont pas élastiques et, après l'installation et le serrage du raccord, un certain fluage se fait, ce qui nécessite un deuxième serrage quelques heures après le premier serrage (généralement le lendemain), ce qui nécessite un deuxième passage des ouvriers installateurs.

En particulier, on a proposé des joints en matière ignifuge, dans lesquels la garniture en aggloméré de fibres d'amiante est retenue par une rondelle munie d'un rebord à angle droit et ayant une section en L inversé.

Cette bague métallique a pour fonction de maintenir et protéger le joint en aggloméré de fibres d'amiante lors de la mise en place et du serrage du raccord; par ailleurs, lors du serrage du raccord, la garniture en aggloméré de fibres d'amiante est écrasée, et la bague métallique s'engage autour de la bride du conduit extérieur du raccord union.

Un joint de ce type est notamment décrit dans la demande de brevet GB-A-2 098 688.

Si un joint de ce type permet d'obtenir une étanchéité satisfaisante (répondant aux normes en la matière) grâce à la présence de la bague métallique, il ne permet pas de résoudre le problème exposé plus haut, posé par le fluage de la garniture, qui nécessite un second serrage quelques heures après le premier serrage.

L'étanchéité des raccords à joints en matière

3

0148813

ignifuge n'est donc obtenue qu'au prix d'un coût de main-d'oeuvre accru, ce qui enlève une grande partie des avantages du système monotubulaire par rapport au système bitubulaire.

Un raccord monotubulaire doit pouvoir répondre à un certain nombre de critères qui paraissent contradictoires, notamment :

- étanchéité parfaite en utilisation normale,

- étanchéité suffisante dans des conditions d'incendie,

- facilité et sécurité d'installation,

- simplicité et économie de réalisation.

Le but de l'invention est de répondre de manière optimale à ces divers critères, en réalisant un joint d'étanchéité pour raccord monotubulaire, qui est constitué d'éléments simples, faciles à fabriquer de manière économique, qui est facile à installer en ne nécessitant en particulier qu'un seul serrage du raccord, et qui assure une étanchéité parfaite en utilisation normale et une étanchéité suffisante dans des conditions d'incendie (satisfaisant au moins aux normes imposées en la matière).

L'invention a pour objet un joint d'étanchéité résistant aux températures élevées, destiné à être inséré entre deux tubulures à raccorder entre elles, comportant chacune deux conduits concentriques présentant des faces d'about annulaires planes perpendiculaires à l'axe des conduits, le conduit extérieur de la première tubulure portant extérieurement, en retrait par rapport à sa face d'about, une bague filetée faisant corps avec elle, formant ainsi une feuillure annulaire le long du bord extérieur de l'extrémité libre de cette première tubulure, le conduit extérieur de la seconde tubulure comportant, au ras de sa face d'about, une bride dirigée vers l'extérieur, l'extrémité libre du conduit intérieur de la seconde tubulure comportant, du côté intérieur, un petit rebord qui fait saillie par rapport à la face d'about, les deux tubulures pouvant être raccordées et serrées l'une vers l'autre au moyen d'un écrou qui se visse sur la bague filetée de la première tubulure, en prenant appui sur la bride de la seconde tubulure; le joint d'étanchéité suivant l'invention comprend :

- une garniture élastique qui présente des surfaces d'appui planes et parallèles, occupant deux zones annulaires concentriques rendues solidaires l'une de l'autre par des régions radiales qui en font partie intégrante, et

- une bague métallique entourant la garniture élastique,

la face intérieure de la bague métallique et le bord extérieur de la garniture élastique présentant la forme d'une surface cylindrique;

les dimensions radiales de la bague métallique et des zones annulaires concentriques de la garniture élastique étant telles

- que la garniture élastique est maintenue dans la bague métallique avec un serrage suffisant pour que le joint puisse être saisi et mis en place en étant tenu par la bague métallique seulement,

- et que, lors de la mise en place du joint d'étanchéité et du serrage subséquent des tubulures l'une vers l'autre, les zones annulaires de la garniture élastique sont serrées entre les faces d'about des conduits des deux tubulures, la zone annulaire centrale étant engagée autour du petit rebord de la seconde tubulure, et la bague métallique s'engage dans la feuillure annulaire de la première tubulure jusqu'à être serrée entre le fond de cette feuillure et la bride de la seconde tubulure.

La garniture élastique du joint d'étanchéité est faite en une matière souple et élastique qui est avantageusement un élastomère et, de préférence, un caoutchouc synthétique.

La bague métallique est faite en un métal ayant une bonne résistance aux températures élevées, tel que le laiton.

Suivant une forme d'exécution préférée, la bague métallique et la garniture élastique ont la même épaisseur.

L'invention est décrite plus en détail ci-après avec référence aux dessins annexés, dans lesquels :

la Fig. 1 est une vue en plan du joint d'étanchéité conforme à l'invention, comportant une garniture élastique et une bague métallique;

la Fig. 2 est une vue en coupe de la garniture élastique (suivant la ligne A-A de la Fig. 1);

la Fig. 3 est une vue en coupe de la bague métallique (suivant la ligne A-A de la Fig. 1);

la Fig. 4 est une vue en coupe axiale d'une tubulure de raccordement solidaire d'une conduite de distribution de gaz, conçue pour y raccorder un compteur à gaz "à raccord unique" (ou "monotubulaire");

la Fig. 5 est une vue en coupe axiale de la tubulure de raccordement d'un compteur à gaz "à raccord unique" (ou "monotubulaire");

la Fig. 6 est une vue en coupe (suivant la ligne A-A de la Fig. 1) du joint d'étanchéité et est dessinée en alignement avec les Fig. 4 et 5 pour illustrer la présentation du joint d'étanchéité devant les faces d'about des deux tubulures à raccorder;

la Fig. 7 est une vue partielle en coupe, à plus grande échelle, montrant le montage réalisé après mise en place et serrage du joint d'étanchéité.

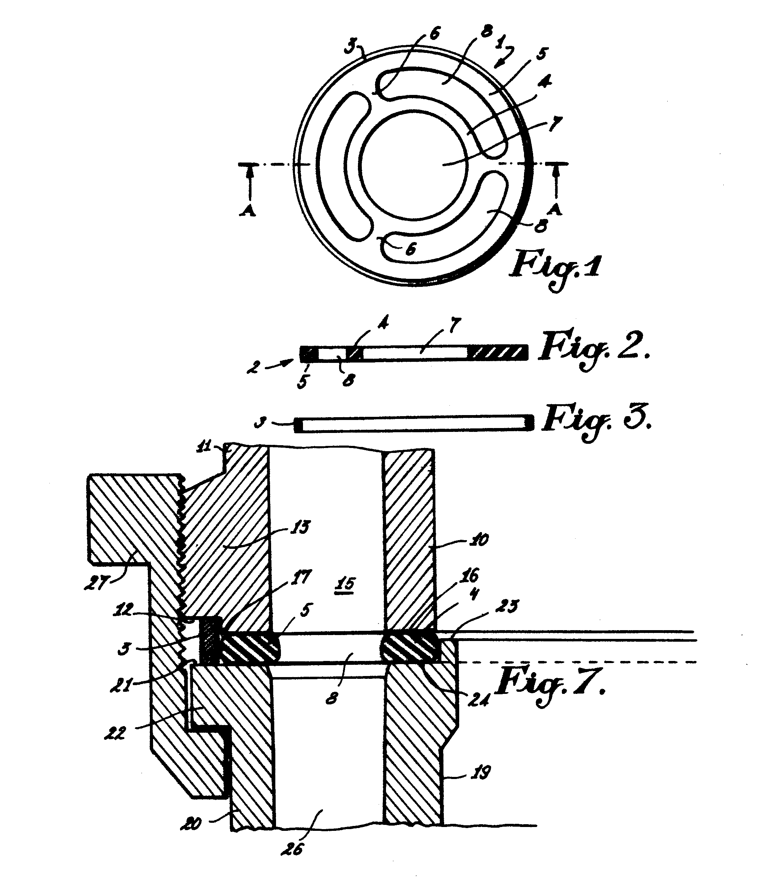

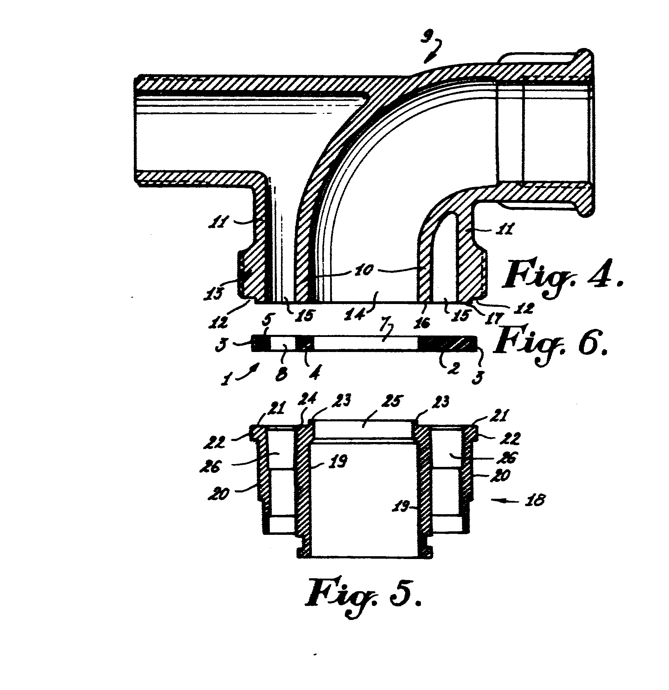

Le joint d'étanchéité 1, suivant l'invention, est représenté en plan à la Fig. 1. Il comprend une garniture élastique ronde 2 logée (et légèrement serrée) dans une bague métallique 3. La garniture élastique 2 est essentiellement composée d'une zone d'étanchéité annulaire intérieure 4 et d'une zone d'étanchéité annulaire extérieure 5 qui sont concentriques et rendues solidaires l'une de l'autre par trois régions radiales 6. Les deux zones d'étanchéité annulaires 4 et 5 délimitent une ouverture intérieure 7 et une ouverture extérieure 8, qui sont dès lors aussi concentriques. L'ouverture extérieure 8 est interrompue en trois endroits angulairement équidistants par les régions radiales 6. Les zones d'étanchéité 4 et 5 et les ouvertures 7 et 8 sont dimensionnées pour coïncider avec les faces d'about et les orifices en agencement coaxial des tubulures à raccorder entre elles, comme le montre la comparaison des Fig. 4, 5 et 6.

Le diamètre intérieur de la bague métallique 3 est tel que la garniture élastique 2 s'adapte avec un léger serrage dans la bague 3, de sorte que le joint d'étanchéité 1 puisse être saisi entre les doigts et posé en place sans se démonter, tout en permettant un mouvemant relatif axial de la garniture élastique 2 par rapport à la bague métallique 3 lors du serrage.

L'épaisseur axiale de la bague métallique 3 est la même que l'épaisseur de la garniture élastique 2.

Dans l'exemple particulier illustré, cette épaisseur est de 3 mm.

La Fig. 4, qui est une coupe de la tubulure de raccordement 9 solidaire d'une conduite de distribution de gaz, montre le conduit intérieur 10 et le conduit extérieur 11. Le conduit extérieur 11 porte extérieurement une bague filetée 13 faisant corps avec lui.

Cette bague filetée 13 est située légèrement en retrait (de 1,2 mm) par rapport à la face d'about du conduit extérieur 11 en formant ainsi, le long du bord extérieur de l'extrémité libre du conduit extérieur 11, une feuillure annulaire 12. Le conduit intérieur 10 définit un orifice central 14 et, en combinaison avec le conduit extérieur 11, un orifice extérieur 15, ces orifices étant coaxiaux. Les faces d'about 16 et 17 des conduits intérieur 10 et extérieur 11 sont planes et perpendiculaires à l'axe des conduits 10 et 11.

La Fig. 5, qui est une coupe de la tubulure de raccordement 18 d'un compteur à gaz "à raccord unique", montre un conduit intérieur 19 et un conduit extérieur 20. Le conduit extérieur 20 comporte, au ras de sa face d'about 21, une bride 22 dirigée vers l'extérieur. L'extrémité libre du conduit intérieur 19 comporte, du côté intérieur, un petit rebord 23 qui fait saillie par rapport à la face d'about 24 de ce conduit intérieur 19.

Le conduit intérieur 19 définit un orifice central 25 et, en combinaison avec le conduit extérieur 20, un orifice extérieur 26. Les orifices 25 et 26 sont coaxiaux et correspondent, respectivement, aux orifices 14 et 15 de la tubulure 9 montrée à la Fig. 4.

Après mise en place du joint d'étanchéité 2, les tubulures 9 et 18 peuvent être raccordées et serrées l'une vers l'autre au moyen d'un écrou 27 (montré seulement à la Fig. 7), qui se visse sur la bague filetée 13 de la tubulure 9, en prenant appui sur la bride 22 du conduit extérieur 20 de la tubulure 18.

Comme le montre la Fig. 7 qui est une vue partielle en coupe (à plus grande échelle) du montage réalisé après mise en place et serrage du joint d'étanchéité 1 entre les faces d'about des tubulures 9 et 18, la zone annulaire 4 de la garniture élastique 2 est engagée autour du petit rebord 23 du conduit intérieur 19 de la tubulure 18. Les zones annulaires 4 et 5 sont serrées (et écrasées de 1,2 mm) entre les faces d'about 16, 17, 21 et 24 des conduits des tubulures 9 et 18 raccordées. La bague métallique 3 s'engage dans la feuillure annulaire 12 du conduit extérieur 11 de la tubulure 9 en s'engageant ainsi autour de l'extrémité libre du conduit 11.

Le serrage de la garniture élastique du joint 1 entre les faces d'about (16, 17, 21 et 24) des conduits des tubulures 9 et 18 est arrêté lorsque la bague métallique 3 est serrée entre le fond de la feuillure 12 de la tubulure 9 et la bride 22 de la tubulure 18.

Dans ces conditions, une étanchéité totale est assurée, en service normal, grâce aux zones annulaires 4 et 5 de la garniture élastique 2, et une étanchéité satisfaisante (répondant au moins aux normes en la matière) est garantie par la bague métallique 3 en cas d'exposition à une température assez élevée (incendie) qui détruit la garniture élastique 2.

Avantageusement, la garniture élastique 2 est faite de caoutchouc synthétique, mais d'autres élastomères ayant des propriétés analogues conviennent. La bague 3 est avantageusement en laiton, ce qui lui procure une malléabilité suffisante pour être serrée entre les tubulures 9 et 18 sans endommager celles-ci qui sont en un métal ferreux (fonte malléable, par exemple). Il reste donc possible, lors d'une réparation ou d'un changement de compteur, d'ôter la garniture élastique 2 et la bague 3 sans endommager les tubulures 9 et 18.

Il est par ailleurs évident que la garniture d'étanchéité 1 est facile à poser sur le tube 18 sans risque que la bague 3 se détache de la garniture

9

0148813

élastique 2, et que l'ensemble est aisé à serrer en place au moyen de l'écrou 27.

REVENDICATIONS
----------------------------

1.- Joint d'étanchéité résistant aux températures élevées, destiné à être inséré entre deux tubulures à raccorder entre elles, comportant chacune deux conduits concentriques présentant des faces d'about annulaires planes perpendiculaires à l'axe des conduits, le conduit extérieur de la première tubulure portant extérieurement, en retrait par rapport à sa face d'about, une bague filetée faisant corps avec elle, formant ainsi une feuillure annulaire le long du bord extérieur de l'extrémité libre de cette première tubulure, le conduit extérieur de la seconde tubulure comportant, au ras de sa face d'about, une bride dirigée vers l'extérieur, l'extrémité libre du conduit intérieur de la seconde tubulure comportant, du côté intérieur, un petit rebord qui fait saillie par rapport à la face d'about, les deux tubulures pouvant être raccordées et serrées l'une vers l'autre au moyen d'un écrou qui se visse sur la bague filetée de la première tubulure, en prenant appui sur la bride de la seconde tubulure, ce joint d'étanchéité étant caractérisé en ce qu'il comprend :

- une garniture élastique qui présente des surfaces d'appui planes et parallèles, occupant deux zones annulaires concentriques rendues solidaires l'une de l'autre par des régions radiales qui en font partie intégrante, et

- une bague métallique entourant la garniture élastique,

la face intérieure de la bague métallique et le bord extérieur de la garniture élastique présentant la forme d'une surface cylindrique;

les dimensions radiales de la bague métallique et des zones annulaires concentriques de la garniture élastique étant telles

- que la garniture élastique est maintenue dans la bague métallique avec un serrage suffisant pour que le joint puisse être saisi et mis en place en étant tenu par la bague métallique seulement,

- et que, lors de la mise en place du joint d'étanchéité et du serrage subséquent des tubulures l'une vers l'autre, les zones annulaires de la garniture élastique sont serrées entre les faces d'about des conduits des deux tubulures, la zone annulaire centrale étant engagée autour du petit rebord de la seconde tubulure, et la bague métallique s'engage dans la feuillure annulaire de la première tubulure jusqu'à être serrée entre le fond de cette feuillure et la bride de la seconde tubulure.

2.- Joint d'étanchéité suivant la revendication 1, caractérisé en ce que la garniture élastique (2) est faite d'élastomère.

3.- Joint d'étanchéité suivant la revendication 2, caractérisé en ce que la garniture élastique (2) est faite de caoutchouc synthétique.

4.- Joint d'étanchéité suivant l'une quelconque des revendications 1 à 3, caractérisé en ce que la bague métallique (3) est faite de laiton.

5.- Joint d'étanchéité suivant l'une quelconque des revendications 1 à 4, caractérisé en ce que la bague métallique (3) et la garniture élastique (2) ont la même épaisseur.

Fig.1

Fig. 2.

Fig. 3.

Fig. 7.

2/2

0148813

Fig. 4.

Fig. 6.

Fig. 5.